# EUROPÄISCHE PATENTSCHRIFT

(11) **EP 1 839 803 B1**
(45) Veröffentlichungstag und Bekanntmachung des Hinweises auf die Patenterteilung: **26.08.2009**
(21) Anmeldenummer: 07006644.4
(22) Anmeldetag: 30.03.2007
(51) Int. Cl.: B23P 19/06, B21J 15/32

(54) **Einpressen von Bolzen**
Pressing-in of bolts
Insertion de boulons

(30) Priorität: 31.03.2006 DE 102006016255
(43) Veröffentlichungstag der Anmeldung: 03.10.2007
(73) Patentinhaber: Arnold & Shinjo GmbH & Co. KG, 74670 Forchtenberg-Ernsbach (DE)
(72) Erfinder: Beck, Friedrich, 74613 Öhringen -Verrenberg (DE)
(74) Vertreter: Patentanwälte Ruff, Wilhelm, Beier, Dauster & Partner

(56) Entgegenhaltungen:
- DE-A1- 4 340 642
- DE-A1- 10 208 935
- DE-U1- 29 902 398
- DE-U1-202004 000 213
- FR-A1- 2 796 581
- US-A- 6 018 863
- US-B1- 6 578 258

## Beschreibung

Die Erfindung betrifft eine Vorrichtung und ein Verfahren zum Einpressen von Einpressbolzen. Das Dokument DE 20 2004 000213 U1 offenbart eine Vorrichtung nach dem Oberbegriff des Anspruchs 1.

Einpressbolzen als Verbindungselement sind bekannt. Sie haben einen Kopf und einen Schaft, der beispielsweise ein Gewinde aufweist. Unterhalb des Kopfes ist eine umlaufende Vertiefung ausgebildet, die zur axial festen Verbindung mit einem Blech dient, in das der Bolzen eingepresst wird. Beispielsweise ist vorher ein Loch hergestellt worden, in das der Einpressbolzen von der Gegenseite her eingepresst wird. Die erwähnte umlaufende Vertiefung dient zur axialen Festlegung, während eine entsprechende Ausbildung an der Unterseite des Kopfs zu einer drehfesten Verbindung führt. Einpressbolzen können auch als Zapfen ausgebildet sein, das heißt ohne ein Gewinde, wenn sie beispielsweise zur Lagerung von Gegenständen dienen sollen. Sie können auch einen von einer Kreisform abweichenden Querschnitt aufweisen. Das Einpressen in ein Blech kann beispielsweise unter Verwendung einer auf der gegenüberliegenden Seite angeordneten Matrize geschehen.

Es ist auch denkbar, dass der Einpressbolzen sich das Loch selbst stanzt (EP 958 100).

Der Erfindung liegt die Aufgabe zu Grunde, eine Möglichkeit zu schaffen, Einpresselemente, insbesondere Einpressbolzen an Stellen einzupressen, die mit bisherigen Methoden nicht erreicht werden konnten.

Zur Lösung dieser Aufgabe schlägt die Erfindung eine Vorrichtung mit den im Anspruch 1 genannten Merkmalen und/oder ein Verfahren mit den im Anspruch 25 genannten Merkmalen vor. Weiterbildungen der Erfindung sind Gegenstand von Unteransprüchen.

Die Einstanzrichtung des einzustanzenden Befestigungselements verläuft senkrecht zu dem Blech an der Stelle, wo das Befestigungselement eingebracht werden soll. Diese Richtung bestimmt die Anordnung des Einpressstempels. Dieser ist in seiner eigenen Längsrichtung hin- und hergehend bewegbar angeordnet. Die Einpresselemente müssen daher von der Seite her in den Bewegungsweg des Einpressstempels gebracht werden. Hierzu dient die Zuführeinrichtung, die die Einpresselemente hintereinander vereinzelt zuführt. Sie werden durch die Zuführeinrichtung in die Halteeinrichtung bewegt, wo sie von dieser in einer bestimmten Position festgehalten werden. Von dort aus werden die Einpresselemente immer dann, wenn ein Einpressvorgang auftreten soll, durch die Übergabeeinrichtung in die Einpressposition bewegt. In der Einpressposition liegen die Einpresselemente axial gegenüber dem Einpressstempel ausgerichtet. Die Einpressbewegung ist dann eine geradlinige Bewegung in Längsrichtung des Einpressstempels.

Durch die von der Erfindung vorgeschlagene Sicherungseinrichtung wird dafür gesorgt, dass die Einpresselemente, sobald sie die Halteposition erreicht haben, nicht mehr rückwärts bewegt werden können, so dass es möglich ist, mit der Vorrichtung beliebige Einpressrichtungen zu verwirklichen. Die Vorrichtung kann also auch über Kopf arbeiten, das heißt die Einpresselemente nach oben bewegen. Dadurch wird es möglich, Einpressvorgänge an beliebigen Stellen eines ortsfest gehaltenen Blechs, beispielsweise eines komplizierten Karosseriebauteils, vorzunehmen.

Bei der Sicherungseinrichtung kann es sich um eine beliebige Einrichtung handeln, die in der Lage ist, die Rückwärtsbewegung des zugeführten Einpresselements zu verhindern. Sie kann beispielsweise durch Reibung oder auch durch andere Kräfte arbeiten, beispielsweise mithilfe von Magneten.

In Weiterbildung der Erfindung kann auch vorgesehen sein, dass die Sicherungseinrichtung eine Sicherungsposition und eine Freigabeposition aufweist, die beide ansteuerbar sind. Insbesondere kann vorgesehen sein, dass zum Ansteuern der beiden Positionen ein Antrieb vorgesehen ist, der die Sicherungseinrichtung von der einen in die andere Position und zurück bewegen kann.

In Weiterbildung der Erfindung kann vorgesehen sein, dass die Sicherungseinrichtung beim Zuführen des Einpresselements in die Halteeinrichtung in ihrer Freigabeposition ist und anschließend in ihre Sicherungsposition gelangt. Die Sicherungsposition kann daher auch als normale Positionen der Sicherungseinrichtung angesehen werden, aus der die Sicherungseinrichtung nur dann heraus bewegt wird, wenn ein Einpresselement zugeführt wird.

Insbesondere kann vorgesehen sein, dass die Sicherungseinrichtung während der Übergabe des Einpresselements in die Einpressposition in der Sicherungsposition bleibt.

In nochmaliger Weiterbildung der Erfindung kann vorgesehen sein, dass der Antrieb für die Halteeinrichtung gleichzeitig auch den Antrieb für die Sicherungseinrichtung und/oder für die Übergabeeinrichtung bildet. Auf diese Weise lassen sich nicht nur Bauelemente einsparen, sondern es kann auf einfache Weise auch eine mechanische Synchronisierung der verschiedenen Bewegungen stattfinden.

In Weiterbildung der Erfindung kann vorgesehen sein, dass die Halteeinrichtung zwei Backen aufweist, von denen mindestens ein Backen bewegbar angeordnet ist, so dass zum Öffnen beziehungsweise Schließen der Halteeinrichtung eine Bewegung des mindestens einen Backens ausreicht. Beispielsweise können beide Backen verschwenkbar sein, und zwar gegenläufig symmetrisch zu der Mittellinie zwischen ihnen.

Es kann ebenfalls vorgesehen sein, dass die Sicherungseinrichtung zwei Backen aufweist, von denen mindestens einer bewegbar angeordnet ist. Die Bewegung kann durch den zugeordneten Antrieb erfolgen. Auch hier kann erfindungsgemäß vorgesehen sein, dass die beiden Backen spiegelsymmetrisch zu einer Mittellinie zwischen ihnen ausgebildet sind, und dass die Bewegung, vorzugsweise die Bewegung beider Backen, eine Verschwenkung um feste Achsen ist.

Je nach dem, wie die Sicherungseinrichtung arbeitet, kann ihre Positionen an irgendeiner Stelle der Vorrichtung ausgewählt werden. Es hat sich als besonders sinnvoll herausgestellt, die Sicherungseinrichtung zwischen der Zuführeinrichtung und der Halteeinrichtung anzuordnen.

In Weiterbildung der Erfindung kann vorgesehen sein, dass der Antrieb für die Halteeinrichtung und/oder die Sicherungseinrichtung einen linear verschiebbaren Schieber aufweist. Dieser Schieber kann an den beiden genannten Einrichtungen zu deren Betätigung angreifen. In nochmaliger Weiterbildung der Erfindung kann nun auch vorgesehen sein, dass der Schieber einen Teil der Übergabeeinrichtung bildet. Man kommt also mit einem einzigen Antrieb für drei Einrichtungen aus, nämlich die Sicherungseinrichtung, die Halteeinrichtung und die Übergabeeinrichtung.

Zur besonders einfachen und leicht verwirklichbaren Ansteuerung kann vorgesehen sein, dass der Antrieb ein Pneumatik - oder Hydraulikzylinder ist oder einen solchen aufweist.

Es ist aber ebenfalls möglich und wird von der Erfindung vorgeschlagen, dass als Antrieb ein elektromechanischer Antrieb dient, beispielsweise auch ein Linearmotor.

Es wurde bereits erwähnt, dass die Sicherungseinrichtung so ausgebildet sein kann, dass die Sicherungsposition ihre normale Positionen ist. Unter anderem um dies zu erreichen, kann vorgesehen sein, dass der Pneumatik- oder Hydraulikzylinder eine neutrale Position aufweist, aus der er in beide entgegengesetzte Richtungen bewegbar ist. Diese neutrale Position, die von dem Antrieb einnehmbar ist, kann damit auch der Sicherungsposition der Sicherungseinrichtung entsprechen. Insbesondere kann bei einem Pneumatik- oder Hydraulikzylinder vorgesehen sein, dass die neutrale Position durch eine Feder bestimmt ist, so dass er dann, wenn kein Druck anliegt, immer in diese Position bewegt wird.

In nochmaliger Weiterbildung kann vorgesehen sein, dass in der neutralen Position des Antriebs sowohl die Halteeinrichtung als auch die Sicherungseinrichtung nicht freigegeben sind.

Erfindungsgemäß kann der Antrieb so ausgebildet sein, dass bei der Bewegung in eine Richtung aus der neutralen Position die Sicherungseinrichtung geöffnet wird.

Es kann ebenfalls der Antrieb so ausgebildet sein, dass bei Bewegung aus der neutralen Position in eine Richtung die Halteeinrichtung geöffnet wird.

Insbesondere kann natürlich vorgesehen sein, dass diese beiden Richtungen entgegengesetzt angeordnet sind.

Erfindungsgemäß kann vorgesehen sein, dass die Öffnung der Halteeinrichtung, das heißt die Bewegung aus der Halteposition in die Freigabeposition, durch Verschieben des Einpresselements gegen die Trennstelle zwischen den Backen der Halteeinrichtung bewirkt wird. Da es sich bei dem Einpresselement beispielsweise um einen im Querschnitt runden Bolzen handelt, ist diese Öffnungsbewegung sehr einfach zu verwirklichen.

Erfindungsgemäß kann vorgesehen sein, dass der Schieber einen Angriff für die Sicherungseinrichtung aufweist. Hierbei kann es sich beispielsweise um einen Zapfen handeln, der in eine entsprechende Ausnehmung oder in den Trennbereich zwischen den beiden Backen der Sicherungseinrichtung eingreift.

Um ein in jedem Fall korrektes Arbeiten der Vorrichtung zu gewährleisten, kann diese einen Sensor aufweisen, zum Überprüfen, ob ein Bolzen vorhanden ist. Dabei kann es sich um einen Sensor handeln, der das Vorhandensein eines Einpresselements an der Einpressposition oder an der Halteposition überprüft.

Erfindungsgemäß können diese Sensoren und die Ansteuerung des Antriebs mit einer Steuereinrichtung verbunden sein, die die verschiedenen Sensoren überprüft.

Erfindungsgemäß kann die Steuerung derart arbeiten, dass dann, wenn ein Einpresselement in der Einpressposition vorhanden ist, dann schon das nächste Einpresselement durch die Zuführeinrichtung zugeführt wird.

Das von der Erfindung vorgeschlagene Verfahren sieht vor, dass die Einpresselemente einzelnen einer Setzvorrichtung zugeführt werden, und dass sie dort in einer bestimmten Position gegen eine zurück Bewegung gesichert werden. Anschließend kann das Einpresselement aus dieser Halteposition in eine Einpressposition übergeben werden, von wo aus das Einpresselement in einer linearen Bewegung in Richtung seiner Längsachse eingepresst wird. Während des Einpressens, spätestens aber bei der Rückwärtsbewegung eines Einpressstempels, kann ein nächstes Einpresselement nachgeführt werden.

Erfindungsgemäß wird das Vorhandensein eines Einpresselements in der Einpressposition abgefragt und nur dann, wenn dort ein Einpresselement vorhanden ist, der Setzvorgang ausgelöst.

Das gleiche gilt für das Vorhandensein eines Einpresselements in der Halteposition, so dass nur dann, wenn dort ein Bolzen vorhanden ist, die Übergabeeinrichtung ausgelöst wird.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: schematisch die Seitenansicht einer Vorrichtung nach der Erfindung;
- Figur 2: einen Querschnitt durch die Vorrichtung der Figur 1;
- Figur 3: in vergrößertem Maßstab einen weiteren Querschnitt durch die Vorrichtung der Figur 1 und 2;
- Figur 4: einen an Darstellung in Form eines perspektivischen Schnitts;
- Figur 5: den Zustand der Vorrichtung der Figur 1 in einem ersten Zustand;
- Figur 6: eine Teilansicht der Darstellung der Figur fünf in einem zweiten Zustand;
- Figur 7: die Darstellung der Figur 6 in einem nochmals weiteren Zustand.

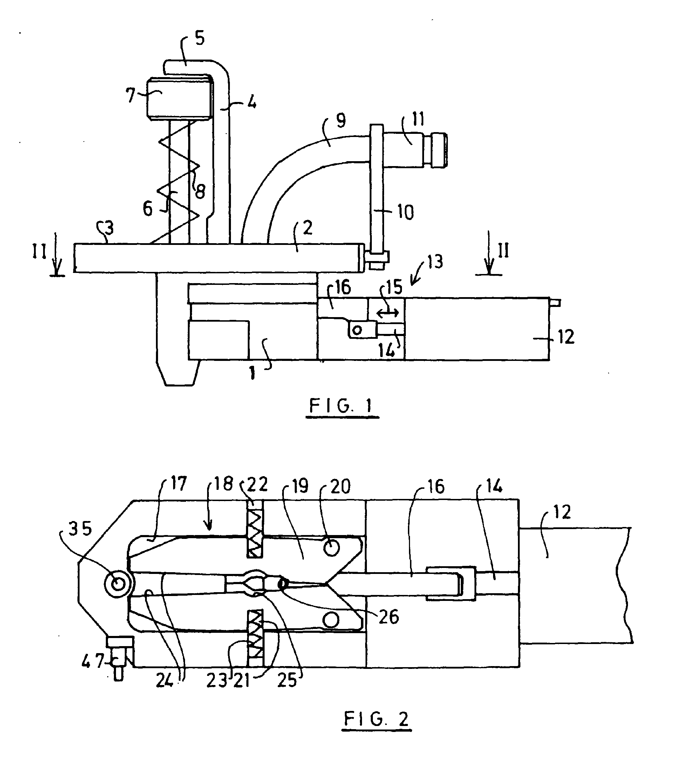

Figur 1 zeigt die von der Erfindung vorgeschlagene Vorrichtung von der Seite. An einem Vorrichtungskörper 1 ist oben eine Platte 2 angebracht, mit deren Hilfe die Vorrichtung an einer bestimmten Stelle einer Anlage montiert werden kann. An der Oberseite 3 der Platte 2 ist ein Winkel 4 angebracht, dessen erster Schenkel senkrecht zur Platte 2 verläuft, und dessen Ende 5 rechtwinklig zur Bildung eines Anschlags umgebogen ist. Parallel zu dem längeren Schenkel des Begrenzungswinkels 4 ist ein Einpressstempel 6 verschiebbar angeordnet, der im Bereich seines einen Endes einen verbreiteten Kopf 7 aufweist. Der Einpressstempel 6 wird mithilfe einer angedeuteten Druckfeder 8 in seine Position beaufschlagt, in der er an der Innenseite des Endes 5 des Begrenzungswinkels 4 anliegt. In axialer Verlängerung des Einpressstempels 6 weist die Vorrichtung auf der unteren Seite der Platte 2 eine in Figur 1 nicht sichtbare Öffnung auf, durch die hindurch ein Einpressbolzen eingepresst werden kann. Innerhalb des Vorrichtungskörpers 1 ist in Verlängerung des Einpressstempels 6 eine zylindrische Bohrung vorhanden, durch die hindurch ein Einpressbolzen ausgestoßen werden kann.

Zu der Oberseite 3 der Platte 2 führt ein Rohr 9, das einen Teil der Zuführeinrichtung für den Einpressbolzen bildet. Das Rohr 9 ist mithilfe einer senkrecht von der Platte 2 abragenden Platte 10 an der Platte 2 gehaltert. Es geht im Bereich seines von der Vorrichtung abgewandten Endes in einen Mündungsansatz 11 über, von dem aus das Einführen von Einpressbolzen erfolgt. Die Einpressbolzen werden durch das Rohr 9 mithilfe von Druckluft befördert.

Seitlich an dem Vorrichtungskörper 1 ist ein Pneumatikzylinder 12 angebracht, der einen Antrieb 13 bildet. Der Pneumatikzylinder 12 enthält in seinem Inneren einen Kolben, der mithilfe von Druckluft bewegt werden kann. Der Kolben ist mit einer Kolbenstange 14 verbunden, die an dem einen Ende aus dem Pneumatikzylinder 12 herausragt und dort in Richtung des Doppelpfeils 15 hin und her gehend bewegt werden kann. Das freie Ende der Kolbenstange 14 ist mit einem Schieber 16 verbunden, der in dem Vorrichtungskörper 1 verschiebbar angeordnet ist. Der Pneumatikzylinder 12 ist mit dem Vorrichtungskörper 1 fest verbunden. Dadurch ist eine Vorrichtung als Einheit gebildet, die relativ klein und Platz sparend ausgebildet ist, so dass sie auch innerhalb von komplizierten Blechformen eingesetzt werden kann.

Figur 2 zeigt einen Horizontalschnitt durch die Vorrichtung der Figur 1 etwa in Höhe der Linie II - II in Figur 1. In dem Vorrichtungskörper 1 ist ein Hohlraum 17 gebildet, in dem eine Sicherungseinrichtung 18 angeordnet ist. Die Sicherungseinrichtung 18 enthält im dargestellten Ausführungsbeispiel zwei Backen 19, die symmetrisch zu einer sie trennenden Längsmittelebene ausgebildet und angeordnet sind. Die beiden Backen 19 sind um angedeutete Zapfen 20 herum verschwenkbar. Sie haben von ihren Außenseite ausgehend Sacklöcher 21, die mit Durchgangsbohrungen 22 in dem Vorrichtungskörper 1 fluchten. Die Bohrungen 22 in dem Vorrichtungskörper 1 können von der Außenseite her mit Schraubstopfen abgeschlossen werden. In den Bohrungen 22 sind angedeutete Druckfedern 23 untergebracht, die die beiden Backen 19 nach innen verschwenken, so dass, falls es möglich ist, die einander zugewandten Innenflächen 24 der beiden Backen 19 einander berühren. In dem geschlossenen Zustand der beiden Backen 19 ist an der Stelle, wo das Rohr 9 mündet, eine Öffnung 25 gebildet, die angenähert kreisrund ist. Der Durchmesser dieser Öffnung 25 ist etwas kleiner als der Durchmesser eines Kopfs eines zu setzenden Einpressbolzens. Dadurch wird es möglich, um den Einpressbolzen hindurch zu lassen, die beiden Backen 19 nur geringfügig auseinander zu verschwenken.

Unter die beiden Backen 19, die die Sicherungseinrichtung 18 bilden, greift der Schieber 16, der in Figur 1 schon erwähnt wurde. Der Schieber 16 weist auf seiner Oberseite einen nach oben ragenden Zapfen 26 auf, der an Schrägflächen an der Innenseite der beiden Backen 19 angreift und dadurch bei einer Bewegung nach rechts in Figur 2 die beiden Backen 19 auseinander schwenken kann. Wird dagegen der Schieber 16 in Figur 2 nach links bewegt, werden die beiden backen 19 wieder geschlossen.

Die Figur 2 zeigt die Sicherungseinrichtung 18 also in ihrer Freigabeposition, in der sie einen einzuführenden Einpressbolzen nicht sichert. Aus dieser Freigabeposition kann die Sicherungseinrichtung 18 dadurch in die Sicherungsposition bewegt werden, dass der Schieber 16 mit seinem Zapfen 26 nach links verschoben wird.

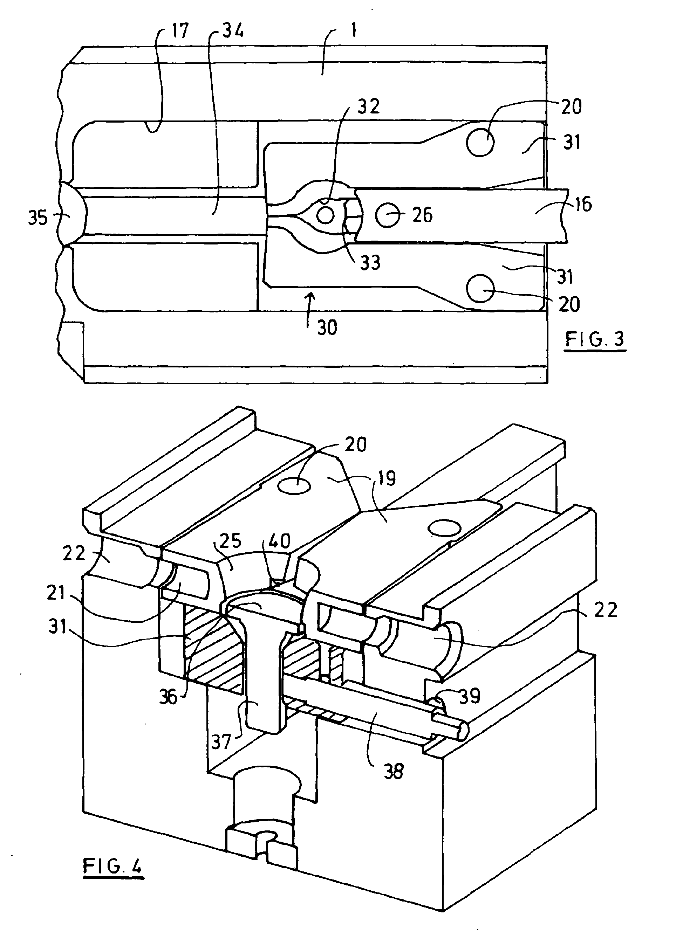

Man kann der Figur 2 in der Mitte zwischen den beiden Backen 19 schon die darunter liegende Halteeinrichtung 30 entnehmen, die jetzt unter Bezugnahme auf Figur 3 beschrieben werden wird. Figur 3 zeigt also einen Teilschnitt durch die Anordnung der Figur 1 in einer Ebene unterhalb der Ebene der Figur 2, und zwar in einem vergrößertem Maßstab. In der bereits erwähnten Ausnehmung 17 ist also unterhalb der Ebene der Sicherungseinrichtung 18 eine Halteeinrichtung 30 angeordnet, die ebenfalls zwei Backen 31 aufweist. Diese beiden Backen, die in Querrichtung der Figur 3 kürzer ausgebildet sind als die Backen 19 der Sicherungseinrichtung 18, sind um die gleichen Zapfen 20 verschwenkbar angeordnet. Auch sie werden durch hier nicht dargestellte Federn in die geschlossene in Figur 3 dargestellte Position beaufschlagt. Die geschlossene Position wird dadurch bestimmt, dass sie an ihren Innenseiten im Bereich des äußeren Endes aneinander anliegen. An dieser Stelle ist eine trichterförmige Öffnung 32 gebildet, die damit gegenüber der Öffnung 25 und der Mündung des Rohrs 9 ausgerichtet ist. Die Trichterform ist gewählt, da die Einpressbolzen, die mit dieser Vorrichtung bearbeitet werden sollen, an der Unterseite ihres Kopfes nur allmählich in den Schaft übergehen. Sie können daher von den beiden Backen 31 der Halteeinrichtung 30 in dieser Weise zentriert und gehalten werden. Der in Figur 2 bereits beschriebene Schieber 16 greift zwischen die Innenseiten der beiden Backen 31 an. Sein freies Ende 33 liegt etwa am Rand der Öffnung 32 an. In Verlängerung der Mittellinie zwischen den beiden Backen 31 und damit in Verlängerung des Schiebers 16 ist in dem Hohlraum 17 eine Führung 34 für die zu bearbeitenden Bolzen gebildet. Am linken Ende ist die Bohrung 35 angedeutet, die den Setzkanal für die Einpressbolzen bildet. Wenn man sich vorstellt, dass in der Öffnung 32 ein Einpressbolzen hängt, so schiebt der Schieber 16, wenn er nach links bewegt wird, den Einpressbolzen gegen die sich einander allmählich annähernden Seitenwände der beiden Backen. Beim Weiterschieben gleitet der Schaft des Bolzens zwischen diese einander zugewandten Seitenwände und drückt auf diese Weise die beiden Backen 31 gegen die Wirkung der erwähnten Federn auseinander.

Nun zu Figur 4, die in perspektivischer Darstellung einen Querschnitt durch die Vorrichtung der Figur 1 etwa in einer Ebene darstellt, die den Sacklöchern 21 und den Durchgangsbohrungen 22 entspricht. Die beiden die Sicherungseinrichtung 18 bildenden Backen 19 sind hier in der geschlossenen Stellung dargestellt. Die von ihnen gebildete Öffnung 25, die ebenfalls Trichterform aufweist, ist also jetzt etwas kleiner in ihrem Durchmesser als der Kopf 36 eines Einpressbolzens, dessen Schaft 37 durch die Öffnung 32 der Backen 31 der Halteeinrichtung hindurch ragt. Auf diese Weise dient die Sicherungseinrichtung 18 dazu, dass der einmal in die Halteeinrichtung 30 gelangte Einpressbolzen nicht wieder zurück bewegt werden kann. Die Vorrichtung nach der Erfindung soll in jeder beliebigen Position verwendet werden können, also auch auf dem Kopf stehend. Dies ist hiermit möglich. Die Figur 4 zeigt weiterhin, dass in einer seitlichen Öffnung eines der beiden Backen 31 der Halteeinrichtung 30 ein Sensor 38 angeordnet ist, der durch eine Bohrung 39 des Vorrichtungskörpers 31 nach außen ragt und dort genügend Spiel hat, so dass er bei einer Bewegung der Backen 31 nicht an die Wand der Bohrung 39 anstößt. Dieser Sensor 38 kann das Vorhandensein eines Einpressbolzens in den Backen der Halteeinrichtung 30 ermitteln.

Man kann der Figur 4 ebenfalls entnehmen, dass die Backen 19 der Sicherungseinrichtung 18 an ihren Unterseiten eine Ausnehmung 40 aufweisen, die zur Unterbringung des Zapfens 26 dienen. Der Zapfen 26 ragt also nicht bis zur Oberseite der Backen 19 hinaus.

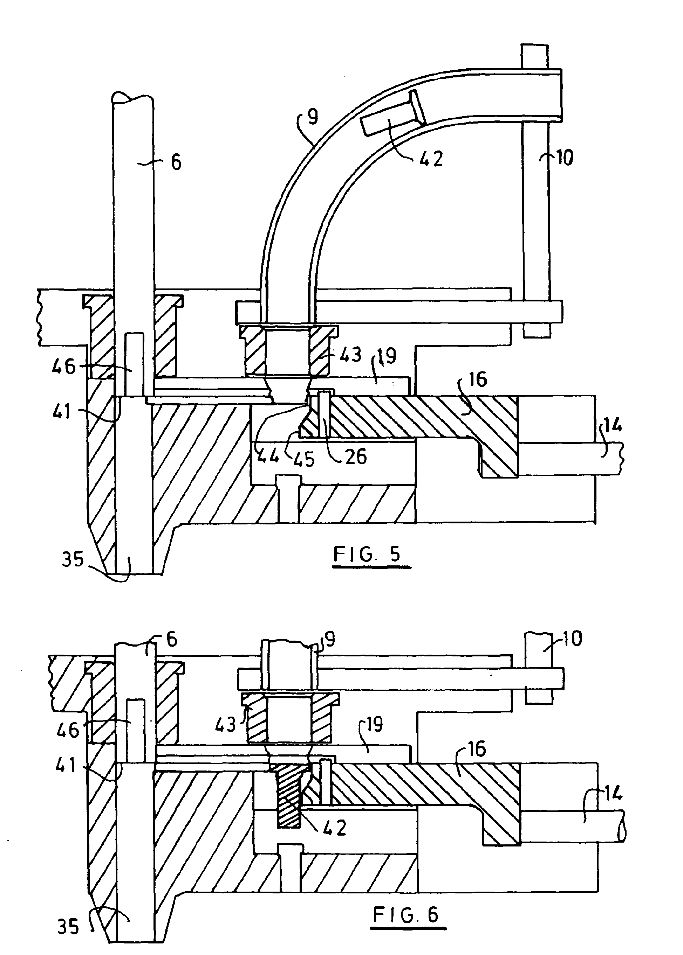

Nun zu Figur 5. Diese zeigt ausgehend von der Figur 1 einen Vertikalschnitt durch die Längsachse der Vorrichtung. Der Einpressstempel 6 ist mit seinem unteren Ende 41 in Höhe der Oberseite des Kopfs 36 eines in der Halteeinrichtung angeordneten Einpressbolzens positioniert. Der Schieber 16 ist aus der neutralen Position, die der Sicherungsstellung der Sicherungseinrichtung 18 entspricht, siehe Figur 4, in die Freigabeposition der Sicherungseinrichtung bewegt, siehe Figur 2. Dies ist durch eine Bewegung des Schiebers 16 weg von der Position des Einpressstempels 6 bewirkt worden. Jetzt wird ein Einpressbolzen 42 durch das Rohr 9 mit Luftdruck geblasen. Er gelangt durch das Rohr 9 von seiner Position mit der Längsrichtung quer zu der Achse des Einpressstempels in eine Position parallel zur Achse des Einpressstempels 6. Er fällt durch eine Führungsbuchse 43 und durch die Öffnung 25 der Sicherungseinrichtung in die Öffnung 32 zwischen den beiden Backen 31 der Halteeinrichtung 30. Dort wird er so festgehalten, wie dies in Figur 4 dargestellt ist. Anschließend bewegt sich der Schieber 16 zunächst so weit, dass die Sicherungseinrichtung 18 ihre beiden Backen 19 wieder einander annähert, so dass jetzt der Bolzen festgelegt ist. Das linke, das heißt freie Ende des Schiebers 16, ist so gestaltet, dass es einen oberen Abschnitt 44 aufweist, der in seiner Position dem Rand des Kopfs 36 des Einpressbolzens 42 entspricht. Unterhalb dieses Abschnitts 44 springt der Schieber 16 im Bereich seines freien Endes vor und bildet einen zweiten Abschnitt 45, der dann an dem Schaft 37 des Einpressbolzens 42 anliegt. Dieser Zustand ist in Figur 6 dargestellt. Hier hängt jetzt der Einpressbolzens 42 an Ort und Stelle in einer ausgerichteten Positionen. Sein Schaft 37 verläuft parallel zu der Achse der Bohrung 35, und die Oberseite seines Kopfs 36 verläuft horizontal ausgerichtet gegenüber der Stirnfläche 41 des Einpressstempels 6.

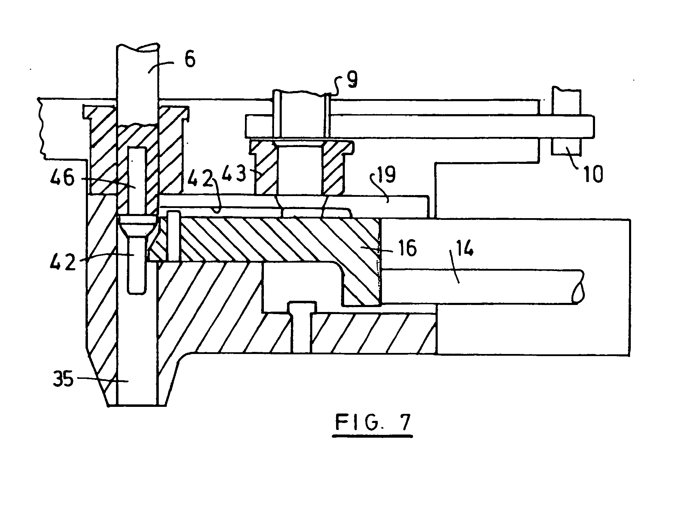

Dass der Einpressbolzen 42 jetzt vorhanden ist, wird mithilfe des Sensors 38, siehe Figur 4, festgestellt. Nun kann eine Steuerung dem Antrieb 13 betätigen. In die entsprechende Kammer des Pneumatikzylinder 12 wird jetzt Luft oder Gas eingeführt, was dazu führt, dass die Kolbenstange 14 den Schieber 16 aus dem Pneumatikzylinder 12 herausfährt. Der Schieber 16 bewegt sich in Richtung auf die Position des Einpressstempels 6. Sein vorderes Ende mit den Abschnitten 44 und 45 greift an dem Einpressbolzen 42 an und schiebt diesen die Führung 34 entlang bis in die Position, in der er vollständig innerhalb der Bohrung 35 angeordnet ist. Dies ist die Einpressposition. Diese Einpressposition ist schematisch in Figur 7 dargestellt. In dem vorderen Ende des Einpressstempels 6 ist in einer Öffnung ein Magnet 46 eingesetzt, der den Einpressbolzen 42 festhält. Dies ist dann erforderlich, wenn der Einpressbolzens 42 nach unten eingepresst wird. Da die Vorrichtung für alle Richtungen anwendbar sein soll, ist also dieser Magnet 46 vorgesehen. Selbstverständlich könnte es auch andere Methoden geben, um den Einpressbolzen 42 gegen Herausfallen zu sichern, beispielsweise eine Ansaugvorrichtung, die den Einpressbolzen 42 mithilfe von Unterdruck festhält. Sobald der Einpressbolzen 42 in der in Figur 7 dargestellten Einpressposition angeordnet ist, wird dies einer Steuerung durch den Sensor 47 mitgeteilt, der ähnlich wie der Sensor 38 die Position des Einpressbolzens 42 ermittelt. Der Sensor 47 ist in Figur 2 dargestellt. Jetzt kann der Schieber 16 zurückgezogen werden. Dann wird der Einpressstempel 6 vorwärts bewegt, wozu ein nicht zu der Vorrichtung gehörender Antrieb vorgesehen ist. Sobald der Schieber 16 zurückgezogen ist, was gleichzeitig mit der Vorwärtsbewegung des Einpressstempels 6 geschehen kann, kann ein neuer Einpressbolzens 42 durch das Rohr 9 nachgeliefert werden, der dann in der gleichen Weise weiterbehandelt wird, wie dies gerade beschrieben wurde.

## Patentansprüche

1. Vorrichtung zum Einpressen von Einpresselementen, insbesondere Einpressbolzen (42), mit
einer Zuführeinrichtung zum vereinzelten gesteuerten Zuführen von Einpresselementen,
einer Halteeinrichtung (30) zum Halten eines zugeführten Einpresselements, die
einer Halteposition und eine Freigabeposition aufweist,
einem Antrieb (13) für die Halteeinrichtung,
einem Einpressstempel (6) zum Einpressen eines in einer Einpressposition gehaltenen Einpresselements, sowie mit
einer Übergabeeinrichtung zur Übergabe eines Einpresselements aus der Halteeinrichtung in die Einpressposition **gekennzeichnet durch** eine Sicherungseinrichtung (18) zum Sichern eines zugeführten Einpresselements gegen eine Zurückbewegung.

2. Vorrichtung nach Anspruch 1, bei der die Sicherungseinrichtung (18) eine Sicherungsposition und eine Freigabeposition aufweist, die ansteuerbar sind.

3. Vorrichtung nach Anspruch 1 oder 2, mit einem Antrieb für die Sicherungseinrichtung (18).

4. Vorrichtung nach Anspruch 2 oder 3, bei der die Sicherungseinrichtung (18) beim Zuführen des Einpresselements in die Halteeinrichtung (30) in ihrer Freigabeposition ist und anschließend in ihre Sicherungspositionen gelangt.

5. Vorrichtung nach einem der Ansprüche 2 bis 4, bei der die Sicherungseinrichtung (18) während der Übergabe des Einpresselements in die Einpressposition in ihrer Sicherungsposition bleibt.

6. Vorrichtung nach einem der vorhergehenden Ansprüche, bei der der Antrieb für die Halteeinrichtung (30) gleichzeitig den Antrieb für die Sicherungseinrichtung (18) und/oder die Übergabeeinrichtung bildet.

7. Vorrichtung nach einem der vorhergehenden Ansprüche, bei der die Halteeinrichtung (30) zwei Backen (31) aufweist, von denen mindestens ein Backen (31) bewegbar angeordnet ist.

8. Vorrichtung nach Anspruch 7, bei der beide Backen (31) der Halteeinrichtung (30) verschwenkbar sind, vorzugsweise symmetrisch zur Mittellinie zwischen ihnen.

9. Vorrichtung nach einem der vorhergehenden Ansprüche, bei der die Sicherungseinrichtung (18) zwei Backen (19) aufweist, von denen mindestens ein Backen (19) bewegbar angeordnet ist.

10. Vorrichtung nach Anspruch 9, bei der beide Backen (19) der Sicherungseinrichtung (18) verschwenkbar sind, vorzugsweise symmetrisch zur Mittellinie zwischen ihnen.

11. Vorrichtung nach einem der vorhergehenden Ansprüche, bei der die Sicherungseinrichtung (18) zwischen der Zuführeinrichtung und der Halteeinrichtung (30) angeordnet ist.

12. Vorrichtung nach einem der vorhergehenden Ansprüche, bei der der Antrieb (13) für die Halteeinrichtung (30) und/oder die Sicherungseinrichtung (18) und/oder die Übergabeeinrichtung einen linear verschiebbaren Schieber (16) aufweist.

13. Vorrichtung nach Anspruch 12, bei der der Schieber (16) einen Teil der Übergabeeinrichtung bildet.

14. Vorrichtung nach einem der vorhergehenden Ansprüche, bei der der Antrieb (13) für die Halteeinrichtung (30) und/oder die Sicherungseinrichtung (18) einen Pneumatik- oder Hydraulikzylinder aufweist.

15. Vorrichtung nach einem der vorhergehenden Ansprüche, bei der der Antrieb (13) für die Halteeinrichtung (30) und/oder die Sicherungseinrichtung (18) eine neutrale Position aufweist, aus der heraus er in beide Richtungen bewegbar ist.

16. Vorrichtung nach Anspruch 15, bei der die neutrale Position des Antriebs (13) durch eine Feder bestimmt wird.

17. Vorrichtung nach Anspruch 15 oder 16, bei der die neutrale Position des Antriebs (13) derart ausgebildet ist, dass in ihr die Halteeinrichtung (30) und die Sicherungseinrichtung (18) in ihrer Halteposition beziehungsweise Sicherungsposition sind.

18. Vorrichtung nach einem der vorhergehenden Ansprüche, bei der bei der Bewegung des Antriebs in eine Richtung die Sicherungseinrichtung (18) in ihre Freigabeposition bewegt wird.

19. Vorrichtung nach einem der vorhergehenden Ansprüche, bei der bei Bewegung des Antriebs in eine Richtung die Halteeinrichtung (18) in ihre Freigabeposition bewegt wird.

20. Vorrichtung nach einem der Ansprüche 7 bis 19, bei der die Öffnung der Halteeinrichtung (30) durch Schieben des Einpresselements gegen die Trennstelle zwischen den Backen (31) der Halteeinrichtung bewirkt wird.

21. Vorrichtung nach einem der Ansprüche 12 bis 20, bei der der Schieber (16) eine Angriffsstelle für die Betätigung der Sicherungseinrichtung (18) aufweist.

22. Vorrichtung nach einem der vorhergehenden Ansprüche, mit Sensoren (38, 47) zur Überprüfung des Vorhandenseins von Einpresselementen in der Halteposition und/oder der Einpressposition.

23. Vorrichtung nach Ansprüchen 22, bei der die Sensoren (38, 47) mit einer Steuerung verbunden sind, die die Position der Einpresselemente ermittelt.

24. Vorrichtung nach einem der vorhergehenden Ansprüche, bei der bei einem in der Einpressposition befindlichen Einpresselement das nächste Einpresselement in die Halteposition bewegt werden kann.

25. Verfahren zum Setzen von Einpresselementen, bei dem
Einpresselemente einzeln einer Setzvorrichtung zugeführt werden,
ein zugeführtes Einpresselement gegen eine Zurückbewegung gesichert wird,
das Einpresselement aus der Halteposition in einer Einpressposition übergeben und
von dort in einer linearen Bewegung in Richtung seiner Längsachse eingepresst wird, wobei
während des Einpressens des Einpresselements ein nächstes Einpresselement der Vorrichtung zugeführt wird.

26. Verfahren nach Anspruch 25, bei dem das Vorhandensein eines Einpresselements in der Einpressposition abgefragt und nur bei vorhandenem Einpresselement der Setzvorgang ausgelöst wird.

27. Verfahren nach Anspruch 25 oder 26,bei dem das Vorhandensein eines Einpresselements in der Halteposition abgefragt und nur bei vorhandenem Einpresselement die Übergabeeinrichtung ausgelöst wird.

## Claims

1. An apparatus for pressing insert elements, in particular insert studs (42), with
a feeding device for individual controlled delivery of insert elements,
a holding device (30) for holding a delivered insert element, which
features a holding position and a release position,
a drive (13) for the holding device,
a press stamp (6) for pressing an insert element held in an insertion position, as well as
a transfer device for transferring an insert element from the holding device into the insertion position
**characterised by** a safety device (18) for securing a delivered insert element against backwards motion.

2. The apparatus according to Claim 1, wherein the safety device (18) features a safety position and a release position that can be activated.

3. The apparatus according to Claim 1 or 2, with a drive for the safety device (18).

4. The apparatus according to Claim 2 or 3, wherein the safety device (18) upon delivery of the insert element in the holding device (30) is in its release position and subsequently reaches its safety positions.

5. The apparatus according to one of the Claims 2 to 4, wherein the safety device (18) remains in its safety position during the transfer of the insert element in the insertion position.

6. The apparatus according to one of the preceding Claims, wherein the drive for the holding device (30) concurrently forms the drive for the safety device (18) and/or the transfer device.

7. The apparatus according to one of the preceding Claims, wherein the holding device (30) features two jaws (31), of which at least one jaw (31) is movably disposed.

8. The apparatus according to Claim 7, wherein both jaws (31) of the holding device (30) can be swivelled, preferably symmetrically to the middle line between them.

9. The apparatus according to one of the preceding Claims, wherein the safety device (18) features two jaws (19), of which at least one jaw (19) is movably disposed.

10. The apparatus according to Claim 9, wherein both jaws (19) of the safety device (18) can be swivelled, preferably symmetrically to the middle line between them.

11. The apparatus according to one of the preceding Claims, wherein the safety device (18) is disposed between the feeding device and the holding device (30).

12. The apparatus according to one of the preceding Claims, wherein the drive (13) for the holding device (30) and/or the safety device (18) and/or the transfer device features a linearly slidable slider (16).

13. The apparatus according to Claim 12, wherein the slider (16) forms a part of the transfer device.

14. The apparatus according to one of the preceding Claims, wherein the drive (13) for the holding device (30) and/or the safety device (18) features a pneumatic or hydraulic cylinder.

15. The apparatus according to one of the preceding Claims, wherein the drive (13) for the holding device (30) and/or the safety device (18) features a neutral position, from which it is movable in both directions.

16. The apparatus according to Claim 15, wherein the neutral position of the drive (13) is determined by a spring.

17. The apparatus according to Claim 15 or 16, wherein the neutral position of the drive (13) is formed in such a manner that in it the holding device (30) and the safety device (18) are in their holding position or safety position.

18. The apparatus according to one of the preceding Claims, wherein during the motion of the drive in one direction, the safety device (18) is moved in its release position.

19. The apparatus according to one of the preceding Claims, wherein during the motion of the drive in one direction, the holding device (18) is moved in its release position.

20. The apparatus according to one of the Claims 7 to 19, wherein the opening of the holding device (30) is caused by the sliding of the insert element against the partition point between the jaws (31) of the holding device.

21. The apparatus according to one of the Claims 12 to 20, wherein the slider (16) features an application point for actuating the safety device (18).

22. The apparatus according to one of the preceding Claims, with sensors (38, 47) for verification of the presence of insert elements in the holding position and/or of the insertion position.

23. The apparatus according to Claim 22, wherein the sensors (38, 47) are connected with a control system that detects the position of the insert elements.

24. The apparatus according to one of the preceding Claims, wherein for an insert element located in the insertion position the next insert element can be moved into the holding position.

25. A process for placing insert elements, wherein
the insert elements are individually fed into a placement apparatus,
a delivered insert element is secured against backwards motion,
the insert element is transferred from the holding position into an insertion position and
from there it is pressed in a linear motion in the direction of its longitudinal axis, wherein
during the process of pressing the insert element a next insert element is fed into the apparatus.

26. The process according to Claim 25, wherein the presence of an insert element in the insertion position is detected and the placement process is triggered only in the presence of an insert element.

27. The process according to Claim 25 or 26, wherein the presence of an insert element in the holding position is detected and the transfer device is triggered only in the presence of an insert element.

## Revendications

1. Dispositif destiné à enfoncer des éléments à enfoncer, notamment des boulons à enfoncer (42), comprenant
un dispositif d'alimentation destiné à l'alimentation contrôlée individuelle d'éléments à enfoncer,
un dispositif de retenue (30) destiné à retenir un élément à enfoncer amené, lequel dispositif de retenue
présente une position de retenue et une position de libération,
un entraînement (13) pour le dispositif de retenue,
un poinçon d'enfoncement (6) pour enfoncer un élément à enfoncer maintenu dans une position d'enfoncement, ainsi qu'
un dispositif de transfert pour le transfert d'un élément à enfoncer du dispositif de retenue à la position d'enfoncement,
**caractérisé par** un dispositif de blocage (18) destiné à bloquer un élément à enfoncer amené contre un mouvement arrière.

2. Dispositif selon la revendication 1, dans lequel le dispositif de blocage (18) présente une position de blocage et une position de libération, qui sont commandables.

3. Dispositif selon la revendication 1 ou 2, comprenant un entraînement pour le dispositif de blocage (18).

4. Dispositif selon la revendication 2 ou 3, dans lequel le dispositif de blocage (18), lors de l'alimentation de l'élément à enfoncer dans le dispositif de retenue (30), est dans sa position de libération et arrive ensuite dans sa position de blocage.

5. Dispositif selon l'une quelconque des revendications 2 à 4, dans lequel le dispositif de blocage (18) reste dans sa position de blocage pendant le transfert de l'élément à enfoncer en position d'enfoncement.

6. Dispositif selon l'une quelconque des revendications précédentes, dans lequel l'entraînement pour le dispositif de retenue (30) forme simultanément l'entraînement pour le dispositif de blocage (18) et/ou le dispositif de transfert.

7. Dispositif selon l'une quelconque des revendications précédentes, dans lequel le dispositif de retenue (30) présente deux mâchoires (31), dont au moins une mâchoire (31) est disposée de manière mobile.

8. Dispositif selon la revendication 7, dans lequel les deux mâchoires (31) du dispositif de retenue (30) sont orientables, de préférence de manière symétrique par rapport à la ligne médiane entre elles.

9. Dispositif selon l'une quelconque des revendications précédentes, dans lequel le dispositif de blocage (18) présente deux mâchoires (19), dont au moins une mâchoire (19) est disposée de manière mobile.

10. Dispositif selon la revendication 9, dans lequel les deux mâchoires (19) du dispositif de blocage (18) sont orientables, de préférence de manière symétrique par rapport à la ligne médiane entre elles

11. Dispositif selon l'une quelconque des revendications précédentes, dans lequel le dispositif de blocage (18) est disposé entre le dispositif d'alimentation et le dispositif de retenue (30).

12. Dispositif selon l'une quelconque des revendications précédentes, dans lequel l'entraînement (13) pour le dispositif de retenue (30) et/ou pour le dispositif de blocage (18) et/ou pour le dispositif de transfert présente un coulisseau (16) déplaçable de manière linéaire.

13. Dispositif selon la revendication 12, dans lequel le coulisseau (16) forme une partie du dispositif de transfert.

14. Dispositif selon l'une quelconque des revendications précédentes, dans lequel l'entraînement (13) pour le dispositif de retenue (30) et/ou pour le dispositif de blocage (18) présente un vérin pneumatique ou un vérin hydraulique.

15. Dispositif selon l'une quelconque des revendications précédentes, dans lequel l'entraînement (13) pour le dispositif de retenue (30) et/ou pour le dispositif de blocage (18) présente une position neutre, à partir de laquelle il est déplaçable dans les deux sens.

16. Dispositif selon la revendication 15, dans lequel la position neutre de l'entraînement (13) est déterminée par un ressort.

17. Dispositif selon la revendication 15 ou 16, dans lequel la position neutre de l'entraînement (13) est réalisée de manière à ce que, dans elle, le dispositif de retenue (30) et le dispositif de blocage (18) sont dans leur position de retenue, respectivement dans leur position de blocage.

18. Dispositif selon l'une quelconque des revendications précédentes, dans lequel, lors du mouvement de l'entraînement dans un sens, le dispositif de blocage (18) est déplacé dans sa position de libération.

19. Dispositif selon l'une quelconque des revendications précédentes, dans lequel, lors du mouvement de l'entraînement dans un sens, le dispositif de retenue (30) est déplacé dans sa position de libération.

20. Dispositif selon l'une quelconque des revendications 7 à 19, dans lequel l'ouverture du dispositif de retenue (30) est causée par coulissement de l'élément à enfoncer contre le point de rupture entre les mâchoires (31) du dispositif de retenue.

21. Dispositif selon l'une quelconque des revendications 12 à 20, dans lequel le coulisseau (16) présente un point d'attaque pour l'actionnement du dispositif de blocage (18).

22. Dispositif selon l'une quelconque des revendications précédentes, comprenant des capteurs (38, 47) pour le contrôle de la présence d'éléments à enfoncer dans la position de retenue et/ou dans la position d'enfoncement.

23. Dispositif selon la revendication 22, dans lequel les capteurs (38, 47) sont connectés par une commande qui détecte la position des éléments à enfoncer.

24. Dispositif selon l'une quelconque des revendications précédentes, dans lequel, lorsqu'un élément à enfoncer se trouve dans la position d'enfoncement, l'élément à enfoncer suivant peut être déplacé en position de retenue.

25. Procédé de pose d'éléments à enfoncer, dans lequel
des éléments à enfoncer sont alimentés individuellement à un dispositif de pose,
un élément à enfoncer amené est bloqué contre un mouvement arrière,
l'élément à enfoncer est transféré de la position de retenue dans une position d'enfoncement et
de là est enfoncé, dans un mouvement linéaire, dans le sens de son axe longitudinal,
un élément à enfoncer suivant étant amené au dispositif pendant l'enfoncement de l'élément à enfoncer.

26. Procédé selon la revendication 25, dans lequel la présence en position d'enfoncement d'un élément à enfoncer est interrogée et l'opération de pose est déclenchée seulement lorsque l'élément à enfoncer est présent.

27. Procédé selon la revendication 25 ou 26, dans lequel la présence en position de retenue d'un élément à enfoncer est interrogée et le dispositif de transfert est déclenché seulement lorsque l'élément à enfoncer est présent.
